# EUROPEAN PATENT SPECIFICATION

(11) **EP 4 331 333 B1**
(45) Date of publication and mention of the grant of the patent: **16.07.2025**
(21) Application number: 22193927.5
(22) Date of filing: 05.09.2022
(51) Int. Cl.: A01B 69/04, A01B 79/00

(54) **METHOD AND ELECTRONIC CONTROL SYSTEM FOR AUTOMATICALLY CONTROLLING AN AUXILIARY FUNCTION OF AN AGRICULTURAL MACHINE, AND AGRICULTURAL MACHINE**
VERFAHREN UND ELEKTRONISCHES STEUERSYSTEM ZUR AUTOMATISCHEN STEUERUNG EINER HILFSFUNKTION EINER LANDWIRTSCHAFTLICHEN MASCHINE UND LANDWIRTSCHAFTLICHE MASCHINE
PROCÉDÉ ET SYSTÈME DE COMMANDE ÉLECTRONIQUE POUR CONTRÔLER AUTOMATIQUEMENT UNE FONCTION AUXILIAIRE D'UNE MACHINE AGRICOLE, ET MACHINE AGRICOLE

(43) Date of publication of application: 06.03.2024
(73) Proprietor: Kverneland Group Nieuw-Vennep B.V., 2153 LR Nieuw-Vennep (NL)
(72) Inventor: VAN BRUGGEN, René, 2153 LR Nieuw-Vennep (NL)
(74) Representative: Bittner, Thomas L.

(56) References cited:
- EP-B1- 2 821 864
- EP-B1- 3 297 412
- WO-A2-2021/089813

## Description

The present disclosure refers to a method and an electronic control system for automatically controlling an auxiliary function of an agricultural machine, and an agricultural machine.

### Background

An agricultural machine may be provided with a work vehicle such as tractor and an implement configured to conduct agricultural work on the field, thereby, providing a combination. The implement may be trailed to the work vehicle. Alternatively, the implement may be mounted to the work vehicle which may provide for the implement being integrated with the work vehicle in some cases.

Operation control for the agricultural machine may be conducted by an electronic control system. For example, the electronic control system may be provided with a plurality of functional units or components, for example, a sensor unit configured to detect sensor signals by one or more sensors provided on at least one of the work vehicle and the implement. A common standard, namely ISO 11783, was proposed for providing a network infrastructure for transmitting data and signals between various devices, units and / or components that may be provided in the agricultural machine.

With respect to the network infrastructure, a common data bus is provided to which different devices, units and components are connected. Through the data bus electronic data can be exchanged between the devices, units and / or components connected to the data bus. Among the components there are usually a user terminal, and a plurality of electronic control units (ECU) each of which is assigned to a functional element of the agricultural machine such as a working tool provided on the implement. The electronic control unit provides control signals to the functional element assigned to the respective electronic control unit for operating the functional element. In general, such functional element may refer to an element of the work vehicle or a functional element of the implement. In conclusion, the network infrastructure may provide for data communication within the work vehicle or between the work vehicle and the implement connected to the work vehicle.

User input can received through the user terminal provided by the electronic control system. In response to the user input, in the electronic control system, control signals are generated and transmitted to the electronic control units for controlling operation of the functional elements of the agricultural machine. It has been proposed to use auxiliary devices for controlling operation of the agricultural machine, e.g. a joystick or some other hardware element providing the option for receiving user input. Such auxiliary devices are used for controlling auxiliary functions of one or more functional elements of the agricultural machine. Through the user terminal input functions of the auxiliary device, such as touching an input element of the joystick, can be mapped to control functions of the functional element of the agricultural machine. For example, by moving a joystick functionally connected to the user terminal via the data bus, through the user terminal control signals are provided to the electronic control unit for which the control function is mapped to the joystick operation. Operation of the functional element assigned to the electronic control unit is controlled through a chain of operation from the joystick to the user terminal and finally to the functional element via the electronic control unit.

Document GB 2 484 282 A refers to a method of controlling a tractor and an agricultural tractor control system comprising an electronic control unit (ECU). The ECU is arranged to receive in real time signals from a plurality of sensors associated with operating functions of the tractor. The ECU is also arranged to output control signals to a plurality of controlled operating components and receive a Macro inputted by a user / driver preferably by direct definition or Internet download; each macro comprises a condition and a command. The condition includes a trigger value and a corresponding input variable sensed by a respective sensor. The command involves the transmission of one of said output control signals to control an operating component in a predetermined manner. The ECU is operable to run said macro during which the command is executed in response to the condition being met.

Document EP 2 821 864 B1 refers to a method for controlling an auxiliary function by a control element in an electronic control system of an agricultural machine. The electronic control system is provided with a data bus to which a user terminal and an electronic control unit assigned to a functional element of the agricultural machine are connected. The method comprises the following steps: displaying a virtual control element configuration menu on a terminal display provided on the user terminal and / or an additional user terminal separated from the user terminal and connected to the data bus and the user terminal, whereas a plurality of auxiliary functions and a plurality of virtual control elements are presented on the terminal display to the user, through the user terminal, receiving user configuration input for mapping one of the plurality of auxiliary functions to one of the plurality of virtual control elements, mapping the selected virtual control element to the selected auxiliary function of the electronic control unit according to the user configuration input, whereas the mapping is done by storing electronic information about the assignment of the selected virtual control element and the selected auxiliary function to each other in a memory, displaying the at least one virtual control element on the terminal display, through the user terminal and / or the additional user terminal, receiving user control input for the selected auxiliary function using the at least one virtual control element displayed on the terminal display, and generating a control signal mapped to the selected auxiliary function of the electronic control unit according to the user control input and providing the control signal to the electronic control unit through the data bus for having the electronic control unit controlled the functional element of the agricultural machine according to the control signal. A similar method is also known from EP 3 297 412 B1.

### Summary

It is an object to provide a method and an electronic control system for automatically controlling an auxiliary function of an agricultural machine provided with a work vehicle such as a tractor and an implement, wherein improved automatic operation of functional components of the implement is provided.

For solving the problem, a method and an electronic control system for automatically controlling an auxiliary function of an agricultural machine having a work vehicle and an implement according to the independent claims 1 and 11, respectively, is provided. Further, an agricultural machine according to claim 12 is provided. Additional aspects are disclosed in the dependent claims.

According to an aspect, a method for automatically controlling an auxiliary function in an electronic control system of an agricultural machine is provided, the method comprising: providing an agricultural machine having a work vehicle and an implement provided with a plurality of functional components, such as working tools or a lighting unit, which are controllable in operation by a plurality of auxiliary functions provided in an electronic control system of the agricultural machine, wherein each auxiliary function is configured to control one or more operation steps for at least one of the functional components; providing mapping data in the electronic control system, the mapping data being indicative of mapping the plurality of auxiliary functions to a plurality of operation events detectable for the work vehicle, in operation of the agricultural machine, by a detection unit, such as a sensor device, of the electronic control system and assigned to the work vehicle; operating the agricultural machine and detecting a first operation event for the work vehicle by the detection device; in response to detecting the first operation event, selecting a first auxiliary function from the plurality of auxiliary functions by a selection unit of the electronic control system, the first auxiliary function being mapped to the first operation event, and configured to control operation of a first functional component from the plurality of functional components of the implement; generating, by a generation unit of the electronic control system, a first control signal for controlling operation of the first functional component assigned to the first auxiliary function in the electronic control system; receiving, through a data bus of the electronic control system, the first control signal in a first electronic control unit of the implement assigned to the first functional component of the implement; and by the first electronic control unit, controlling operation of the first functional component of the implement according to the first control signal.

According to another aspect, an electronic control system for automatically controlling an auxiliary function of an agricultural machine having a work vehicle and an implement is provided. The implement comprises a plurality of functional components which are controllable in operation by a plurality of auxiliary functions each configured to control one or more operation steps for at least one of the functional components. The electronic control system is configured to: provide an agricultural machine having a work vehicle and an implement provided with a plurality of functional components operation of which is controllable by a plurality of auxiliary functions each of which is configured to control one or more operation steps for at least one of the functional components; provide mapping data in the electronic control system, the mapping data being indicative of mapping the plurality of auxiliary functions to a plurality of operation events detectable for the work vehicle, in operation of the agricultural machine, by a detection unit of the electronic control system and assigned to the work vehicle; detect a first operation event for the work vehicle by the detection device while the agricultural machine is operated; in response to detecting the first operation event, select a first auxiliary function from the plurality of auxiliary functions by a selection unit of the electronic control system, the first auxiliary function being mapped to the first operation event, and configured to control operation of a first functional component from the plurality of functional components of the implement; generate, by a generation unit of the electronic control system, a first control signal assigned to the first auxiliary function in the electronic control system; receive, through a data bus of the electronic control system, the first control signal in a first electronic control unit of the implement assigned to the first functional component of the implement; and by the first electronic control unit, control operation of the first functional component of the implement according to the first control signal.

In addition, an agricultural machine is provided which comprising a work vehicle such as a tractor, an implement, and the electronic control system.

Technology is provided for automatically controlling one or more auxiliary functions provided in or with the electronic control system of the agricultural machine. The term "auxiliary function" as used here refers to a function assigned to or provided by one of the electronic control units of the implement, the function being accessible for controlling by the user through a control device provided separately from a user terminal in the work vehicle. The separated control device may also be referred to as additional control device, i.e. in addition to the user terminal. Such (additional) control device for user input may be, for example, a joystick provided on the work vehicle. Alternatively or in addition, a touch display, switchbox, button arrangement and / or a touch field with input elements touchable by the user may be provided separately from the user terminal provided by the electronic control system.

In another embodiment the additional control device may be provided by a mobile user device such as a mobile phone operatively connected to the data bus of the electronic control system. Voice commands received by the mobile user device may be transformed into electronic commands for controlling the auxiliary function, thereby, providing for user-initiated control. Also, user input may be received via an arrangement of buttons and / or a touch sensitive display of the mobile user device. A software application may be installed on the mobile user device for functionally connecting the mobile user device to the electronic control system, such as the one or more electronic control units on the implement via the data bus.

The separated control device is operationally or functionally connected to the one or more electronic control units on the implement via the data bus of the electronic control system. Functionality of a functional component or element of the implement controllable by the auxiliary functional, in general, can also be controlled by the user by means of user input to the user terminal provided on the work vehicle. In addition to such user-initiated control of the functionality assigned to the respective auxiliary function, the auxiliary function can be accessed by the user by means of user input to the additional user-controlled control device provided separately from the user terminal. Thus, a function is referred to us auxiliary function if it can not only be accessed via the user terminal by the user, but in addition it can be assigned or mapped to some user input through an additional control device provided in the work vehicle, such as a joystick.

It may be additionally provided that one or more additional functions different from the auxiliary function(s), but also provided in or with the electronic control system of the agricultural machine are controlled by user input to the separated (additional) control device, such one or more additional function not being controllable through the user terminal.

By the technology proposed it is proposed to make use of one or more of the auxiliary functions provided for controlling functional elements or components of the implement automatically in response to detecting an operation event for the work vehicle while the agricultural machine is operated. Thereby, improved controlling is provided for operating the functional elements of the implement in dependence on one or more operation events which may be detected for the work vehicle in operation. In case of detecting a present operation event for the work vehicle, in response an auxiliary function is selected which has been mapped before to such operation event. Control signals are generated by the generation unit which may be provided in the user terminal, thereby, generating the control signals in the user terminal. Following, one or more functional components of the implement are controlled according to the selected auxiliary function automatically. Automatic control of the operation of the implement in dependence on some operation condition (operation event) detected for the work vehicle can be improved.

The functional components of the implement at least in part may be working tools of the implement. Other implement components such as a lighting unit may be provided on the implement.

For example, the generation unit may be provided in the user terminal. Also, the generation unit may be provided as a standalone component.

In the method, the following may be provided: response to detecting the first operation event, selecting a second auxiliary function from the plurality of auxiliary functions by the selection unit, the second auxiliary function being mapped to the first operation event, and configured to control operation of at least one of the first functional component and a second functional component from the plurality of functional components of the implement; generating, by the generation unit, a second control signal assigned to the second auxiliary function in the electronic control system; receiving, through the data bus, the second control signal in at least one of the first electronic control unit and a second electronic control unit on the implement assigned to the second functional component of the implement; and by at least one of the first and second electronic control unit, controlling operation of at least one of the first and second functional component according to the second control signal. In this embodiment a second auxiliary function which is different from the first auxiliary function is selected from the plurality of auxiliary functions also in response to detecting the first operation event.

In this embodiment the first operation event automatically triggers selection of both the first and second auxiliary function. For example, the first operation event detected may make it necessary to adjust operation of two different functional elements of the implement such as two different working tools of the implement. For both the first and the second auxiliary function respective control signals, namely first and second control signals, are generated for controlling at least one of the first electronic control unit and the second electronic control unit on the implement according to the auxiliary functionality.

The first control signal and the second control signal may be applied in a sequential order for controlling operation of at least one of the first and second functional component, wherein the second control signal may be applied according to one of the following control modes: starting application of the second control signal while operation control according to the first control signal is still running, and starting application of the second control signal after operation control according to the first control signal was finished. The first control signal and the second control signal are applied sequentially for controlling operation of the implement, for example, according to a first and second weighting parameter assigned to the control signals, wherein the weighting parameters are indicative, for example, of the first control signal provided with a higher weighting factor compared to the second control signal.

Starting application of the second one of the control signals may be initiated while operation according to the first one of the control signals is still running. Alternatively, operation according to the second one of the control signals may be started after controlling according to the first one of the control signals was finished. More than two auxiliary functions may be selected in response to one or more detected operation events. The plurality of auxiliary functions may be applied for controlling in a sequential order.

The method may further comprise the following: detecting a second operation event for the work vehicle by the detection unit; and selecting the first auxiliary function from the plurality of auxiliary functions by the selection unit if both the first operation event and the second operation event are detected, but not, if only one of the first operation event and the second operation event is detected. In this embodiment detecting only one of the operation events will not yet trigger automatic selection of the first auxiliary function. For example, the first operation event may be detected in case the work vehicle is travelling along a predefined travel route. However, the first auxiliary function may not be selected until the work vehicle is reaching some predefined geographic location along the travel route. Similarly, the second operation event may refer to the work vehicle travelling with some predefined speed. Alternatively, the second operation event may refer to detecting a rotation number of a motor of the driving unit of a work vehicle being below some threshold. Detection of more than two operation events may be required for triggering selection of one or more auxiliary functions.

Applying at least one of the first control signal and the second control signal in response to detecting at least the first operation event may also be referred to as setting or amending a mode of operation for the agricultural machine to a present mode of operation which is different from a prior mode of operation applied to the agricultural machine before detecting at least the first operation event, wherein the present mode of operation is specifically characterized by applying control according to at least the first auxiliary function.

The method may further comprise the following: providing further mapping data in the electronic control system of the agricultural machine, the further mapping data being indicative of mapping the plurality of auxiliary functions to a plurality of user inputs receivable by an input device separately provided from a user terminal of the work vehicle, wherein both the input device and the user terminal are functionally connected to the data bus; receiving an user input by the input device, wherein the user input is indicative of a selection of the first auxiliary function from the plurality of auxiliary functions; and in a user-initiated process, in response to receiving the user input, selecting the first auxiliary function from the plurality of auxiliary functions by the selection unit; generating, by the generation unit, a first user-initiated control signal assigned to the first auxiliary function in the electronic control system; receiving, through the data bus of the electronic control system, the first user-initiated control signal in the first electronic control unit assigned to the first functional component of the implement; and by the first electronic control unit, controlling operation of the first functional component according to the first user-initiated control signal. In an embodiment the control device separately provided from the user terminal may be a mobile user device, such as a mobile phone. The (additional) control device for user input may be, for example, a joystick provided on the work vehicle. Alternatively or in addition, a touch display, switchbox, button arrangement and / or a touch field with input elements touchable by the user may be provided separately from the user terminal provided by the electronic control system.

Different from automatic control of the auxiliary function, the first user-initiated control signal assigned to the first auxiliary function is generated and applied for controlling the first functional component of the implement in response to user input via the additional control or input device provided separately from the user terminal in the work vehicle. The operation control for the first functional component of the implement by the fist user-initiated control signal is essentially the same like the operation triggered and controlled by the first control signal automatically generated and provided in response to detecting the operation event.

The further mapping data may be provided in response to receiving, through the user terminal, user mapping input indicative of the mapping of the plurality of auxiliary functions to the plurality of user inputs. Prior to having one or more of the auxiliary functions available for user-controlled operation, mapping of the plurality of auxiliary functions to the plurality of user inputs may be defined by user mapping input received via the user terminal of the tractor or the (additional) control device. Alternatively, such mapping data may be received from remote, for example, from some remote server device.

In an embodiment, the mapping data and / or the further mapping data may be stored in a storage device configured for storing electronic data and provided in a sub-part of the electronic control system comprising a plurality of electronic control units and being provided in the implement. If the implement, after being disconnected to the work vehicle, is reconnect to the data bus of the same or some other work vehicle, the mapping data and / or the further mapping data may be read from the storage device provided on the implement and provided to the electronic control system of the agricultural machine established by the reconnecting for application in the operation of the agricultural machine.

The method may further comprise providing the agricultural machine with an autonomous work vehicle having a driving control device configured for autonomous driving the work vehicle. Autonomous work vehicles such as autonomous tractors are knows as such. Such self-driving work vehicle is capable of sensing its environment and moving safely with little or no human input. In general, self-driving work vehicles combine a variety of sensors to perceive there surrounding, such as thermographic cameras, radar, lidar, sonar, GPS, audiometry and inertial measurement units. Advanced control system interpret sensory information to identify an appropriate navigation path, as well as obstacles. The driving control device may be functionally connected to the electronic control system of the agricultural machine. In an embodiment, the driving control device may be implemented at least in part by the electronic control system of the agricultural machine.

The method may further comprise providing the agricultural machine according to one of the following implementations: the implement trailed to the work vehicle, and the implement mounted to the work vehicle. In an embodiment the work vehicle may be configured for autonomous driving. Some embodiments, having the implement mounted on the work vehicle, may also be referred to as having the implement integrated into the work vehicle. For the different embodiments, the implement may be selected from the following group: Sprayer, spreader, baler, plough, seeder, cultivator, bale chopper, and mower. In still another embodiment, the implement may be selected from the following group: planter, rotary tiller, precision drill, tillage equipment, rake, loading wagon, slurry tanker, manure spreader, and harvester.

The method may further comprise providing the generation unit of the electronic control system on the work vehicle, and providing at least one of the first control signal, the second control signal, and the first user-initiated control signal from the work vehicle through the data bus to the first / second electronic control unit on the implement. The generation unit may be provided in the user terminal of the work vehicle. The one or more operation events are detected for the work vehicle in operation of the agricultural machine. In general, the operation events detected by the detection unit may also be referred to as work vehicle related operation events. In this embodiment the generation unit is provided on the work vehicle which makes it necessary to transmit the control signals from work vehicle to the implement. Such control signal transmission is conducted wire the data bus to which the generation unit and the electronic control units of the implement are functionally connected, thereby configured, to transmit and / or receive electronic data.

In an embodiment, alternatively or in addition the selection unit may be provided on the work vehicle. Also, the detection unit may be provided on the work vehicle.

The detecting of the first operation event may further comprises detecting an operation event parameter selected from the following group: a location parameter indicative of a present geographic location of the working vehicle; a drive system parameter of a drive system characteristic of a drive system of the working vehicle; a travel parameter of a travel route characteristic of the working vehicle travelling such as travelling on a field or travelling on a road; a sensor parameter of a sensor signal detected by a sensor device such as a sensor device provided on the agricultural machine; an obstruction parameter of an obstruction detected in a surrounding of the agricultural machine such as an obstruction along a travel route of the working vehicle; and a safety parameter of a safety control measure.

The embodiments described above with respect to the method may applied to the electronic control system mutatis mutandis.

The data bus of the electronic control system of the agricultural machine may be implemented, for example, according to ISO 11783.

### Description of further embodiments

Following, further embodiments are described, by way of example, with reference to a figure.

The figure shows a schematic representation of an electronic control system 1 of an agricultural machine. The electronic control system 1 comprises a network infrastructure 2 comprising a data bus 3. In the embodiment shown, the following units or elements are connected to the data bus 3: a user terminal 4, and a task controller 5 provided on a work vehicle 6 such as a tractor, and a plurality of electronic control units (ECU) 7 provided on an implement 8. Optionally, there are further electronic control units 9 provided on the work vehicle 6.

Each of the electronic control units 7 on the implement 8 is assigned to a functional element or component 10 of the implement 8. For example, the functional element or component 10 may be provide for a working tool or a group of working tools assigned an ECU. Similarly, according to an option, at least some of the further electronic control units 9 may be assigned to a further functional element or component 11 provided on the work vehicle 6. For example, the further functional element may be a lifting device for lifting and lowering a coupling device of the work vehicle 6, the coupling device being configured to connect the implement 8 to the work vehicle 6.

Through the data bus 3 electronic data may be transmitted unidirectional or bidirectional between the components connected to the data bus 3. The electronic control system 1 may implement the ISO 11783 standard, for example, ISO 11783-6 standard.

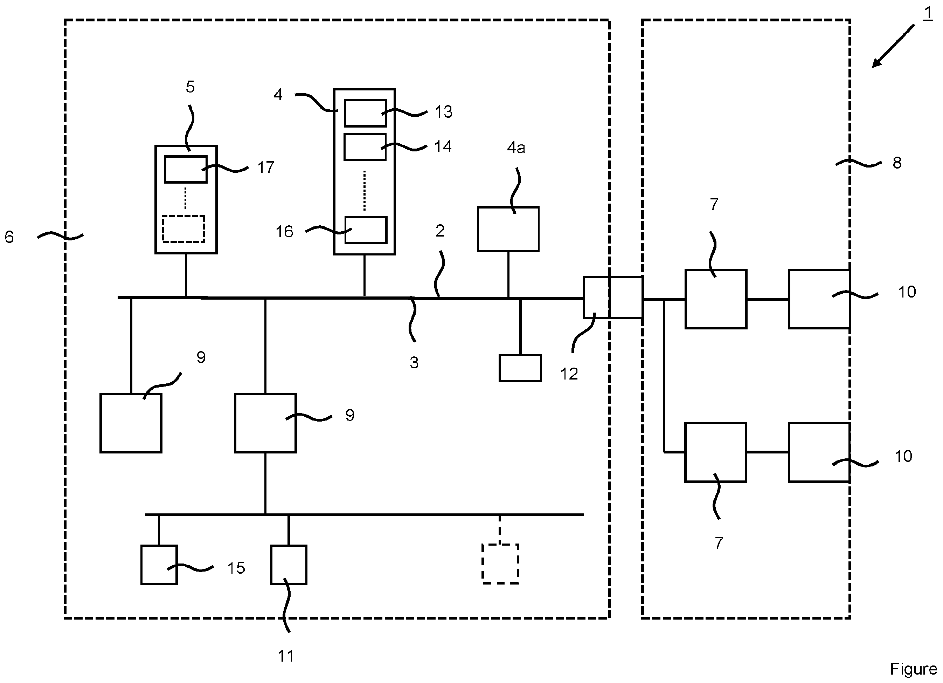

In the embodiment shown in Fig. 1, the electronic control system 1 is provided in the work vehicle 6 and the implement 8 trailed or mounted to the work vehicle 6. The data bus 3 is provided with a plug connector 12. Alternatively or in addition, the data bus 3, at least in part, may be provided with wireless data communication.

The user or operator terminal 4 is provided with a terminal display 13 and provides for user control and user display. The user terminal 4 is provided with a processor unit 14 comprising one or more processors and a memory element connected to the processor(s). Multiple software applications implemented on the user terminal 4 may be running simultaneously.

Through the user terminal 4 user input may be received for controlling the functional elements 10 and, optionally, the further functional element(s) 11 of the agricultural machine. Also, through the terminal display 13 operation information may be displayed to the user.

In the embodiment shown, the work vehicle 6 comprise or provide for the following functional units: detection unit 15 such as a sensor device, selection unit 16, and generation unit 17. The detection unit 15 implemented by hardware and / or software is connected to the data bus 3 and configured to detect, for the work vehicle 6, one or more operation events in the course of operating the agricultural machine, for example, while the agricultural machine is moving on a field for agricultural work and / or the agricultural machine is travelling on a road.

The selection unit 16 implemented by hardware and / or software is configured to select one or more auxiliary functions mapped according to mapping data provided in the electronic control system 1 in response to the detecting the one or more operation events for the work vehicle 6. In the embodiment shown, the selection unit 16, for example, is provided in the user terminal 4. Alternatively, the selection unit 16 may be provided separately from the user terminal 4 (standalone), but still connected to the data bus 3.

The generation unit 17 implemented by hardware and / or software is configured to generate one or more control signals assigned to one or more auxiliary functions selected by the selection unit. In the embodiment shown, the generation unit 17, for example, is provided in the task controller 5. Thus, in this example the control signals are generated in the task controller 5. Alternatively, the generation unit 17 may be provided separately from the task controller 5, but still connected to the data bus 3. For example, the generation unit 17 may be provided in the user terminal 4. Also, the generation unit 17 may be provided as a standalone component.

For the agricultural machine provided with the work vehicle 6 and the implement 8 a method for automatically controlling an auxiliary function in the electronic control system 1 is provided. In the electronic control system 1, operation of at least the plurality of functional components 10 on the implement 8 is controllable by the plurality of auxiliary functions provided in the electronic control system 1, wherein each auxiliary function is configured to control one or more operation steps for at least one of the functional components 10.

Before automatically controlling operation of the implement 8 (by controlling its functional elements 10) by the one or more auxiliary functions, mapping data are provided in the electronic control system 1, the mapping data being indicative of mapping or assigning the plurality of auxiliary functions to a plurality of operation events detectable for the work vehicle 6, in operation of the agricultural machine, by the detection unit 15 of the electronic control system 1 and assigned to the work vehicle 6. The mapping data may be provided in response to receiving user input via the user terminal 4 and / or an additional control device 4a provided separately from the user terminal 4 for user control input and which al be referred to as (additional) input device. The additional control device 4a is also connected to the data bus 3, for example, by wireless data communication. The additional control device 4a may even be provided separately from the work vehicle, for example by some mobile device such as a mobile phone.

In the course of operating the agricultural machine, an operation event for the work vehicle 1 is detected by the detection device 15. In response to detecting the operation event, an auxiliary function is selected from the plurality of auxiliary functions by the selection unit 16 of the electronic control system 1, the selected auxiliary function being mapped to the detected operation event, and configured to control operation of a functional component from the plurality of functional components 10 of the implement 8.

By the generation unit 17 of the electronic control system 1, a control signal assigned to the first auxiliary function is generated in the electronic control system 1. The control signal is received, through the data bus 3 of the electronic control system 1, in an electronic control unit 7 of the implement 8 assigned to the functional component 10 of the implement 8. Following, by one of the electronic control units 7, operation of the functional component 10 of the implement 8 is controlled according to the control signal.

Thus, if one or more operation events are detected, for example, by the detecting unit 15, the one or more control signals generated in response are provided to one or more of the electronic control units 7 provided on the implement 8. In response, the one or more control units 7 on the implement 8 control operation of one or more functional components 10 of the implement 8 to which the one or more control units 7 are assigned according to the one or more control signals, thereby, conducting controlling of the one or more functional components 10 of the implement 8 according to the one or more auxiliary functions in response to the detection of the one or more operation events for the work vehicle 1. Thereby, automatic controlling is provided for the one or more functional components 10 of the implement 8 according to the one or more auxiliary functions in response to detecting the one more operation events for the work vehicle 6.

In case more than one control signal is provided to an electronic control unit 10 of the implement 8, such control signals may be applied for controlling in a sequential order.

In an embodiment the auxiliary function may refer to starting / stopping spraying of a spray material by an agricultural sprayer providing for the implement 8. Such auxiliary function, for example, may be automatically selected in response to the work vehicle 6 entering a field.

With respect to an agricultural sprayer, one or more of the auxiliary functions may refer to lifting and / or lowering a boom provided with spraying devices, the boom being a functional element 10 of the implement 8. The one or more auxiliary functions may be selected and applied in response to the working vehicle 6 together with the implement 8 provided with a sprayer entering or leaving headland.

Similarly, with respect to an agricultural sprayer, in response to detecting the operation event "entering a field", an auxiliary function may be selected and applied which refers to folding / unfolding section of the boom.

With respect to an agricultural sprayer, in response to detecting some change of weather condition by the detection unit 15, for example by a wind gauge (change of wind condition), the following may be applied by controlling one or more auxiliary functions: activate counter measure(s), such as lowering boom of the sprayer and / or change nozzle type used for distributing the material.

Similar automatic operation control may apply to other types of implement such as spreader, baler, and / or mower, for example in response to detecting the operation event "entering or leaving the field". The detection is conducted by the detection unit 15 provided on the work vehicle 6. In response, the one or more auxiliary functions are selected, and respective control signals are generated by the generation unit also provided on the work vehicle 6. Following, the one or more control signals are to be transmitted from the work vehicle 6 to the implement 8 via the data bus 3.

In another example, a filling process for some hopper of a spreader may be controlled by automatic operation control applying use of auxiliary function control. When a current spreading job is not done yet, but the spreader hopper is detected being empty, in response to detecting empty hopper status, the following steps for a refilling may be applied: open hopper cover, controlling filling level of hopper with spreading material while hopper is filled with spreader material, close hopper cover, and continue spreading job.

When a current spreading job is not completed yet, but the spreader hopper is detected being empty, in response to detecting the low hopper status, the following steps for a refilling may be applied: Stop spreading process, stop disc rotation, open hopper cover, controlling filling level of the hopper with the spreading material while hopper is filled with spreading material, close hopper cover, drive to field location, start disc rotation, start spreading process. Automatically controlling of auxiliary function may also be applied for a bale chopper hopper used for shooting silage in a barn. In response to detecting, by the detection unit 13, the bale chopper hopper being loaded with a bale and located in a barn, the following may be initiated: start chopping and shooting into cells (detect the cells with a camera device), move on to the next cell once enough material was spread to a cell, and once empty, reloading another bale and starting over again.

Such automatic control of the operation of one or more of the functional components 10 of the implement 8 such as working tools of the implement 8, may refer to as comprising "triggering start of an auxiliary function" automatically in response to some operation event detected for the work vehicle 1. It may be implemented without need for additional input from the user via at least one of the user terminal 4 and the additional control device 4a, thereby, implementing automatic control.

## Claims

1. Method for automatically controlling an auxiliary function in an electronic control system (1) of an agricultural machine, the method comprising
- providing an agricultural machine having a work vehicle (6) and an implement (8) provided with a plurality of functional components (10), such as working tools or a lighting unit, which are controllable in operation by a plurality of auxiliary functions provided in an electronic control system (1) of the agricultural machine, wherein each auxiliary function is configured to control one or more operation steps for at least one of the functional components (10);
- providing mapping data in the electronic control system (1), the mapping data being indicative of mapping the plurality of auxiliary functions to a plurality of operation events detectable for the work vehicle (6), in operation of the agricultural machine, by a detection unit (15), such as a sensor device, of the electronic control system (1) and assigned to the work vehicle (6);
- operating the agricultural machine and detecting a first operation event for the work vehicle (6) by the detection unit (15);
- in response to detecting the first operation event, selecting a first auxiliary function from the plurality of auxiliary functions by a selection unit (16) of the electronic control system (1), the first auxiliary function being mapped to the first operation event, and configured to control operation of a first functional component from the plurality of functional components (10) of the implement (8);
- generating, by a generation unit (17) of the electronic control system (1), a first control signal for controlling operation of the first functional component assigned to the first auxiliary function in the electronic control system (1);
- receiving, through a data bus (3) of the electronic control system (1), the first control signal in a first electronic control unit of the implement (8) assigned to the first functional component of the implement (8); and
- by the first electronic control unit, controlling operation of the first functional component of the implement (8) according to the first control signal.

2. Method of claim 1, further comprising
- in response to detecting the first operation event, selecting a second auxiliary function from the plurality of auxiliary functions by the selection unit, the second auxiliary function being mapped to the first operation event, and configured to control operation of at least one of the first functional component and a second functional component from the plurality of functional components (10) of the implement (8);
- generating, by the generation unit, a second control signal assigned to the second auxiliary function in the electronic control system (1);
- receiving, through the data bus (3), the second control signal in at least one of the first electronic control unit and a second electronic control unit on the implement (8) assigned to the second functional component of the implement (8); and
- by at least one of the first and second electronic control unit, controlling operation of at least one of the first and second functional component according to the second control signal.

3. Method of claim 2, wherein the first control signal and the second control signal are applied in a sequential order for controlling operation of at least one of the first and second functional component, wherein the second control signal is applied according to one of the following control modes:
- starting application of the second control signal while operation control according to the first control signal is still running, and
- starting application of the second control signal after operation control according to the first control signal was finished.

4. Method of at least one of the preceding claims, further comprising
- detecting a second operation event for the work vehicle (6) by the detection unit (15); and
- selecting the first auxiliary function from the plurality of auxiliary functions by the selection unit if both the first operation event and the second operation event are detected, but not, if only one of the first operation event and the second operation event is detected.

5. Method of at least one of the preceding claims, further comprising
- providing further mapping data in the electronic control system (1) of the agricultural machine, the further mapping data being indicative of mapping the plurality of auxiliary functions to a plurality of user inputs receivable by an input device (4a) separately provided from a user terminal (4) of the work vehicle (6), wherein both the input device (4a) and the user terminal (4) are functionally connected to the data bus (3);
- receiving an user input by the input device (4a), wherein the user input is indicative of a selection of the first auxiliary function from the plurality of auxiliary functions; and
- in a user-initiated process,
- in response to receiving the user input, selecting the first auxiliary function from the plurality of auxiliary functions by the selection unit (16);
- generating, by the generation unit (15), a first user-initiated control signal assigned to the first auxiliary function in the electronic control system (1);
- receiving, through the data bus (3) of the electronic control system (1), the first user-initiated control signal in the first electronic control unit assigned to the first functional component of the implement (8); and
- by the first electronic control unit, controlling operation of the first functional component according to the first user-initiated control signal.

6. Method of claim 5, wherein the further mapping data is provided in response to receiving, through the user terminal, user mapping input indicative of the mapping of the plurality of auxiliary functions to the plurality of user inputs.

7. Method of at least one of the preceding claims, further comprising providing the agricultural machine with an autonomous work vehicle (6) having a driving control device configured for autonomous driving the work vehicle (6).

8. Method of at least one of the preceding claims, further comprising providing the agricultural machine according to one of the following implementations: the implement (8) hooked to the work vehicle (6), and the implement (8) carried by the work vehicle (6).

9. Method of at least one of the preceding claims, further comprising providing the generation unit of the electronic control system (1) on the work vehicle (6), and providing at least one of the first control signal, the second control signal, and the first user-initiated control signal from the work vehicle (6) through the data bus (3) to the first / second electronic control unit on the implement (8).

10. Method of at least one of the preceding claims, wherein the detecting of the first operation event further comprises detecting an operation event parameter selected from the following group:
- a location parameter indicative of a present geographic location of the working vehicle;
- a drive system parameter of a drive system characteristic of a drive system of the working vehicle;
- a travel parameter of a travel route characteristic of the working vehicle travelling such as travelling on a field or travelling on a road;
- a sensor parameter of a sensor signal detected by a sensor device such as a sensor device provided on the agricultural machine;
- an obstruction parameter of an obstruction detected in a surrounding of the agricultural machine such as an obstruction along a travel route of the working vehicle;
- a safety parameter of a safety control measure; and
- an implement status parameter indicative of an implement status.

11. An electronic control system (1) for automatically controlling an auxiliary function of an agricultural machine having a work vehicle (6) and an implement (8) provided with a plurality of functional components (10), such as working tools or a lighting unit, which are controllable in operation by a plurality of auxiliary functions each configured to control one or more operation steps for at least one of the functional components (10), wherein the electronic control system (1) is configured to
- provide an agricultural machine having a work vehicle (6) and an implement (8) provided with a plurality of functional components (10) operation of which is controllable by a plurality of auxiliary functions each of which is configured to control one or more operation steps for at least one of the functional components (10);
- provide mapping data in the electronic control system (1), the mapping data being indicative of mapping the plurality of auxiliary functions to a plurality of operation events detectable for the work vehicle (6), in operation of the agricultural machine, by a detection unit (15) such as a sensor device of the electronic control system (1) and assigned to the work vehicle (6);
- detect a first operation event for the work vehicle (6) by the detection unit (15) while the agricultural machine is operated;
- in response to detecting the first operation event, select a first auxiliary function from the plurality of auxiliary functions by a selection unit (16) of the electronic control system (1), the first auxiliary function being mapped to the first operation event, and configured to control operation of a first functional component from the plurality of functional components (10) of the implement (8);
- generate, by a generation unit (17) of the electronic control system (1), a first control signal for controlling operation of the first functional component assigned to the first auxiliary function in the electronic control system (1);
- receive, through a data bus (3) of the electronic control system (1), the first control signal in a first electronic control unit of the implement (8) assigned to the first functional component of the implement (8); and
- by the first electronic control unit, control operation of the first functional component of the implement (8) according to the first control signal.

12. An agricultural machine, comprising a work vehicle (6), an implement (8), and an electronic control system (1) according to claim 11.

## Patentansprüche

1. Verfahren zum automatischen Steuern einer Hilfsfunktion in einem elektronischen Steuersystem (1) einer landwirtschaftlichen Maschine, wobei das Verfahren Folgendes umfasst
- Bereitstellen einer landwirtschaftlichen Maschine, die ein Arbeitsfahrzeug (6) und ein Gerät (8) umfasst, das mit einer Vielzahl von Funktionskomponenten (10), wie Arbeitswerkzeugen oder einer Beleuchtungseinheit versehen ist, die im Betrieb durch eine Vielzahl von Hilfsfunktionen steuerbar sind, die in einem elektronischen Steuersystem (1) der landwirtschaftlichen Maschine bereitgestellt sind, wobei jede Hilfsfunktion dazu konfiguriert ist, einen oder mehrere Betriebsschritte für mindestens eine der Funktionskomponenten (10) zu steuern;
- Bereitstellen von Abbildungsdaten in dem elektronischen Steuersystem (1), wobei die Abbildungsdaten das Abbilden der Vielzahl von Hilfsfunktionen auf eine Vielzahl von Betriebsereignissen angeben, die für das Arbeitsfahrzeug (6) beim Betrieb der landwirtschaftlichen Maschine durch eine Erfassungseinheit (15), wie eine Sensorvorrichtung, des elektronischen Steuersystems (1), erfassbar sind, und dem Arbeitsfahrzeug (6) zugewiesen sind;
- Betreiben der landwirtschaftlichen Maschine und Erfassen eines ersten Betriebsereignisses für das Arbeitsfahrzeug (6) durch die Erfassungseinheit (15);
- als Reaktion auf das Erfassen des ersten Betriebsereignisses, Auswählen einer ersten Hilfsfunktion aus der Vielzahl von Hilfsfunktionen durch eine Auswahleinheit (16) des elektronischen Steuersystems (1), wobei die erste Hilfsfunktion auf das erste Betriebsereignis abgebildet wird und dazu eingerichtet ist, den Betrieb einer ersten Funktionskomponente aus der Vielzahl von Funktionskomponenten (10) des Geräts (8) zu steuern;
- Erzeugen durch eine Erzeugungseinheit (17) des elektronischen Steuersystems (1), eines ersten Steuersignals zum Steuern des Betriebs der ersten Funktionskomponente, die der ersten Hilfsfunktion in dem elektronischen Steuersystem (1) zugewiesen ist;
- Empfangen durch einen Datenbus (3) des elektronischen Steuersystems (1) des ersten Steuersignals in einer ersten elektronischen Steuereinheit des Geräts (8), die der ersten Funktionskomponente des Geräts (8) zugewiesen ist; und
- Steuern des Betriebs der ersten Funktionskomponente des Geräts (8) gemäß dem ersten Steuersignal durch die erste elektronische Steuereinheit.

2. Verfahren nach Anspruch 1, das weiter Folgendes umfasst
- als Reaktion auf das Erfassen des ersten Betriebsereignisses, Auswählen einer zweiten Hilfsfunktion aus der Vielzahl von Hilfsfunktionen durch eine Auswahleinheit, wobei die zweite Hilfsfunktion auf das erste Betriebsereignis abgebildet wird und dazu eingerichtet ist, den Betrieb mindestens einer der ersten Funktionskomponente und einer zweiten Funktionskomponente aus der Vielzahl von Funktionskomponenten (10) des Geräts (8) zu steuern;
- Erzeugen durch die Erzeugungseinheit eines zweiten Steuersignals, das der zweiten Hilfsfunktion in dem elektronischen Steuersystem (1) zugewiesen ist;
- Empfangen durch den Datenbus (3) des zweiten Steuersignals in mindestens einer der ersten elektronischen Steuereinheit und einer zweiten elektronischen Steuereinheit auf dem Gerät (8), die der zweiten Funktionskomponente des Geräts (8) zugewiesen ist; und
- Steuern des Betriebs mindestens einer der ersten und zweiten Funktionskomponente gemäß dem zweiten Steuersignal durch mindestens eine der ersten und der zweiten elektronischen Steuereinheit.

3. Verfahren nach Anspruch 2, wobei das erste Steuersignal und das zweite Steuersignal in einer sequenziellen Reihenfolge zum Steuern des Betriebs mindestens einer der ersten und der zweiten Funktionskomponente angewendet wird, wobei das zweite Steuersignal gemäß einem der folgenden Steuermodi angewendet wird:
- Starten der Anwendung des zweiten Steuersignals, während Betriebssteuerung gemäß dem ersten Steuersignal noch läuft, und
- Starten der Anwendung des zweiten Steuersignals, nachdem Betriebssteuerung gemäß dem ersten Steuersignal abgeschlossen wurde.

4. Verfahren nach mindestens einem der vorstehenden Ansprüche, das weiter Folgendes umfasst
- Erfassen eines zweiten Betriebsereignisses für das Arbeitsfahrzeug (6) durch die Erfassungseinheit (15); und
- Auswählen der ersten Hilfsfunktion aus der Vielzahl von Hilfsfunktionen durch die Auswahleinheit, wenn sowohl das erste Betriebsereignis als auch das zweite Betriebsereignis erfasst werden, aber nicht, wenn nur eines des ersten Betriebsereignisses und des zweiten Betriebsereignisses erfasst wird.

5. Verfahren nach mindestens einem der vorstehenden Ansprüche, das weiter Folgendes umfasst
- Bereitstellen weiterer Abbildungsdaten in dem elektronischen Steuersystem (1) der landwirtschaftlichen Maschine, wobei die weiteren Abbildungsdaten das Abbilden der Vielzahl von Hilfsfunktionen auf eine Vielzahl von Benutzereingaben angeben, die durch eine Eingabevorrichtung (4a) empfangen werden können, die separat von einem Benutzerendgerät (4) des Arbeitsfahrzeugs (6) bereitgestellt wird, wobei sowohl die Eingabevorrichtung (4a) als auch das Benutzerendgerät (4) funktional mit dem Datenbus (3) verbunden sind;
- Empfangen einer Benutzereingabe durch die Eingabevorrichtung (4a), wobei die Benutzereingabe eine Auswahl der ersten Hilfsfunktion aus der Vielzahl von Hilfsfunktionen angibt; und
- in einem vom Benutzer eingeleiteten Prozess,
- als Reaktion auf das Empfangen der Benutzereingabe, Auswählen der ersten Hilfsfunktion aus der Vielzahl von Hilfsfunktionen durch die Auswahleinheit (16);
- Erzeugen durch die Erzeugungseinheit (15) eines ersten vom Benutzer eingeleiteten Steuersignals, das der ersten Hilfsfunktion in dem elektronischen Steuersystem (1) zugewiesen ist;
- Empfangen durch den Datenbus (3) des elektronischen Steuersystems (1) des ersten vom Benutzer eingeleiteten Steuersignals in der ersten elektronischen Steuereinheit, die der ersten Funktionskomponente des Geräts (8) zugewiesen ist; und
- Steuern des Betriebs der ersten Funktionskomponente gemäß dem ersten vom Benutzer eingeleiteten Steuersignal durch die erste elektronische Steuereinheit.

6. Verfahren nach Anspruch 5, wobei die weiteren Abbildungsdaten als Reaktion auf das Empfangen durch das Benutzerendgerät einer Benutzer-Abbildungseingabe bereitgestellt wird, die das Abbilden der Vielzahl von Hilfsfunktionen auf die Vielzahl von Benutzereingaben angibt.

7. Verfahren nach mindestens einem der vorstehenden Ansprüche, das weiter das Bereitstellen der landwirtschaftlichen Maschine mit einem autonomen Arbeitsfahrzeug (6) umfasst, das eine Antriebssteuervorrichtung aufweist, die für autonomes Fahren des Arbeitsfahrzeugs (6) eingerichtet ist.

8. Verfahren nach mindestens einem der vorstehenden Ansprüche, das weiter das Bereitstellen der landwirtschaftlichen Maschine gemäß einer der folgenden Umsetzungen umfasst: das Gerät (8) ist an das Arbeitsfahrzeug (6) gehakt, und das Gerät (8) ist von dem Arbeitsfahrzeug (6) getragen.

9. Verfahren nach mindestens einem der vorstehenden Ansprüche, das weiter das Bereitstellen der Erzeugungseinheit des elektronischen Steuersystems (1) auf dem Arbeitsfahrzeug (6) und das Bereitstellen mindestens eines des ersten Steuersignals, des zweiten Steuersignals und des ersten vom Benutzer eingeleiteten Steuersignals von dem Arbeitsfahrzeug (6) durch den Datenbus (3) an die erste/zweite elektronische Steuereinheit auf dem Gerät (8) umfasst.

10. Verfahren nach mindestens einem der vorstehenden Ansprüche, wobei das Erfassen des ersten Betriebsereignisses weiter das Erfassen eines Betriebsereignisparameters umfasst, der aus der folgenden Gruppe ausgewählt ist:
- ein Ortsparameter, der einen aktuellen geographischen Ort des Arbeitsfahrzeugs angibt;
- ein Antriebssystemparameter eines Antriebssystemmerkmals eines Antriebssystems des Arbeitsfahrzeug;
- ein Fahrparameter eines Fahrroutenmerkmals des fahrenden Arbeitsfahrzeugs, wie Fahren auf einem Feld oder Fahren auf einer Straße;
- ein Sensorparameter eines Sensorsignals, das von einer Sensorvorrichtung, wie einer Sensorvorrichtung, die auf der landwirtschaftlichen Maschine bereitgestellt ist, erfasst wird;
- ein Hindernisparameter eines Hindernisses, das in einer Umgebung der landwirtschaftlichen Maschine erfasst wird, wie ein Hindernis entlang einer Fahrtroute des Arbeitsfahrzeugs;
- einen Sicherheitsparameter einer Sicherheitsprüfmaßnahme; und
- einen Gerätestatusparameter, der einen Gerätestatus angibt.

11. Elektronisches Steuersystem (1) zum automatischen Steuern einer Hilfsfunktion einer landwirtschaftlichen Maschine, die ein Arbeitsfahrzeug (6) und ein Gerät (8) aufweist, das mit einer Vielzahl von Funktionskomponenten (10), wie Arbeitswerkzeugen oder einer Beleuchtungseinheit versehen ist, die im Betrieb durch eine Vielzahl von Hilfsfunktionen steuerbar sind, die jeweils dazu eingerichtet sind, einen oder mehrere Betriebsschritte für mindestens eine der Funktionskomponenten (10) zu steuern, wobei das elektronische Steuersystem (1) dazu eingerichtet ist
- eine landwirtschaftliche Maschine bereitzustellen, die ein Arbeitsfahrzeug (6) und ein Gerät (8) aufweist, das mit einer Vielzahl von Funktionskomponenten (10) bereitgestellt ist, deren Betrieb durch eine Vielzahl von Hilfsfunktionen steuerbar ist, die jeweils dazu eingerichtet sind, einen oder mehrere Betriebsschritte für mindestens eine der Funktionskomponenten (10) zu steuern;
- Abbildungsdaten in dem elektronischen Steuersystem (1) bereitzustellen, wobei die Abbildungsdaten das Abbilden der Vielzahl von Hilfsfunktionen auf eine Vielzahl von Betriebsereignissen angeben, die für das Arbeitsfahrzeug (6) beim Betrieb der landwirtschaftlichen Maschine durch eine Erfassungseinheit (15), wie eine Sensorvorrichtung des elektronischen Steuersystems (1), erfassbar sind, und dem Arbeitsfahrzeug (6) zugewiesen sind;
- ein erstes Betriebsereignis für das Arbeitsfahrzeug (6) durch die Erfassungseinheit (15) zu erfassen, während die landwirtschaftliche Maschine betrieben wird;
- als Reaktion auf das Erfassen des ersten Betriebsereignisses, eine erste Hilfsfunktion aus der Vielzahl von Hilfsfunktionen durch eine Auswahleinheit (16) des elektronischen Steuersystems (1) auszuwählen, wobei die erste Hilfsfunktion auf das erste Betriebsereignis abgebildet wird und dazu eingerichtet ist, den Betrieb einer ersten Funktionskomponente aus der Vielzahl von Funktionskomponenten (10) des Geräts (8) zu steuern;
- durch eine Erzeugungseinheit (17) des elektronischen Steuersystems (1) ein erstes Steuersignal zum Steuern des Betriebs der ersten Funktionskomponente, die der ersten Hilfsfunktion in dem elektronischen Steuersystem (1) zugewiesen ist, zu erzeugen;
- durch einen Datenbus (3) des elektronischen Steuersystems (1) das erste Steuersignal in einer ersten elektronischen Steuereinheit des Geräts (8) zu empfangen, die der ersten Funktionskomponente des Geräts (8) zugewiesen ist; und
- durch die erste elektronische Steuereinheit den Betrieb der ersten Funktionskomponente des Geräts (8) gemäß dem ersten Steuersignal zu steuern.

12. Landwirtschaftliche Maschine, die ein Arbeitsfahrzeug (6), ein Gerät (8) und ein elektronisches Steuersystem (1) nach Anspruch 11 umfasst.

## Revendications

1. Procédé de commande automatique d'une fonction auxiliaire dans un système de commande électronique (1) d'une machine agricole, le procédé comprenant les étapes consistant à :
- prévoir une machine agricole ayant un véhicule de travail (6) et un outil (8) muni d'une pluralité de composants fonctionnels (10), comme des outils de travail ou une unité d'éclairage, qui peuvent être commandées en fonctionnement par une pluralité de fonctions auxiliaires prévues dans un système de commande électronique (1) de la machine agricole, chaque fonction auxiliaire étant configurée pour commander une ou plusieurs étapes de fonctionnement pour au moins un des composants fonctionnels (10) ;
- fournir des données cartographiques dans le système de commande électronique (1), les données cartographiques indiquant la correspondance de la pluralité de fonctions auxiliaires avec une pluralité d'événements de fonctionnement détectables pour le véhicule de travail (6), lors du fonctionnement de la machine agricole, par une unité de détection (15), telle qu'un dispositif capteur, du système de commande électronique (1) et affectées au véhicule de travail (6) ;
- faire fonctionner la machine agricole et détecter un premier événement de fonctionnement du véhicule de travail (6) par l'unité de détection (15) ;
- en réponse à la détection du premier événement de fonctionnement, sélectionner une première fonction auxiliaire parmi la pluralité de fonctions auxiliaires par une unité de sélection (16) du système de commande électronique (1), la première fonction auxiliaire étant cartographiée sur le premier événement de fonctionnement, et configurée pour commander le fonctionnement d'un premier composant fonctionnel parmi la pluralité de composants fonctionnels (10) de l'outil (8) ;
- générer, par une unité de génération (17) du système de commande électronique (1), un premier signal de commande pour commander le fonctionnement du premier composant fonctionnel affecté à la première fonction auxiliaire dans le système de commande électronique (1) ;
- recevoir, par l'intermédiaire d'un bus de données (3) du système de commande électronique (1), le premier signal de commande dans une première unité de commande électronique de l'outil (8) associée au premier composant fonctionnel de l'outil (8) ; et
- par la première unité de commande électronique, contrôler le fonctionnement du premier composant fonctionnel de l'outil (8) en fonction du premier signal de commande.

2. Procédé selon la revendication 1, comprenant en outre les étapes consistant à
- en réponse à la détection du premier événement de fonctionnement, sélectionner une seconde fonction auxiliaire parmi la pluralité de fonctions auxiliaires par l'unité de sélection, la seconde fonction auxiliaire étant cartographiée sur le premier événement de fonctionnement, et configurée pour commander le fonctionnement d'au moins un des premier et second composants fonctionnels parmi la pluralité de composants fonctionnels (10) de l'outil (8) ;
- générer, par l'unité de génération, un second signal de commande affecté à la deuxième fonction auxiliaire dans le système de commande électronique (1) ;
- recevoir, par l'intermédiaire du bus de données (3), le second signal de commande dans au moins une unité parmi la première unité de commande électronique et une seconde unité de commande électronique sur l'outil (8) associée au second composant fonctionnel de l'outil (8) ; et
- par au moins l'une des première et seconde unités de commande électronique, commander le fonctionnement d'au moins l'une des première et seconde composantes fonctionnelles en fonction du second signal de commande.

3. Procédé selon la revendication 2, dans lequel le premier signal de commande et le second signal de commande sont appliqués dans un ordre séquentiel pour commander le fonctionnement d'au moins l'un des premier et second composants fonctionnels, le second signal de commande étant appliqué selon l'un des modes de commande suivants :
- démarrage de l'application du second signal de commande alors que la commande de fonctionnement selon le premier signal de commande est toujours en cours, et
- démarrage de l'application du second signal de commande après la fin de commande de fonctionnement selon le premier signal de commande.

4. Procédé selon au moins l'une des revendications précédentes, comprenant en outre
- la détection d'un second événement de fonctionnement pour le véhicule de travail (6) par l'unité de détection (15) ; et
- la sélection de la première fonction auxiliaire parmi la pluralité de fonctions auxiliaires par l'unité de sélection si le premier événement de fonctionnement et le second événement de fonctionnement sont tous deux détectés, mais pas si seulement l'un des premier événement de fonctionnement et second événement de fonctionnement est détecté.

5. Procédé selon au moins l'une des revendications précédentes, comprenant en outre
- la fourniture d'autres données cartographiques dans le système de commande électronique (1) de la machine agricole, les autres données cartographiques étant indicatives de la cartographie de la pluralité de fonctions auxiliaires avec une pluralité d'entrées d'utilisateur pouvant être reçues par un dispositif d'entrée (4a) prévu séparément d'un terminal d'utilisateur (4) du véhicule de travail (6), le dispositif d'entrée (4a) et le terminal d'utilisateur (4) étant connectés fonctionnellement au bus de données (3) ;
- la réception d'une entrée d'utilisateur par le dispositif d'entrée (4a), l'entrée d'utilisateur indiquant une sélection de la première fonction auxiliaire parmi la pluralité de fonctions auxiliaires ; et
- dans le cadre d'un processus initié par l'utilisateur,
- en réponse à la réception de l'entrée d'utilisateur, la sélection de la première fonction auxiliaire parmi la pluralité de fonctions auxiliaires par l'unité de sélection (16) ;
- la génération, par l'unité de génération (15), d'un premier signal de commande initié par l'utilisateur et affecté à la première fonction auxiliaire dans le système de commande électronique (1) ;
- la réception, par le bus de données (3) du système de commande électronique (1), du premier signal de commande initié par l'utilisateur dans la première unité de commande électronique affectée au premier composant fonctionnel de l'outil (8) ; et
- par la première unité de commande électronique, la commande du fonctionnement du premier composant fonctionnel en fonction du premier signal de commande initié par l'utilisateur.

6. Procédé selon la revendication 5, dans lequel les autres données cartographiques sont fournies en réponse à la réception, par l'intermédiaire du terminal d'utilisateur, d'une entrée cartographique d'utilisateur indicative de la cartographie de la pluralité de fonctions auxiliaires avec la pluralité d'entrées d'utilisateur.

7. Procédé selon au moins l'une quelconque des revendications précédentes, comprenant en outre l'équipement de la machine agricole avec un véhicule de travail autonome (6) ayant un dispositif de commande de conduite configuré pour la conduite autonome du véhicule de travail (6).

8. Procédé selon au moins l'une des revendications précédentes, comprenant en outre l'équipement de la machine agricole selon l'une des formes de fourniture réalisations suivantes : l'outil (8) accroché au véhicule de travail (6), et l'outil (8) porté par le véhicule de travail (6).

9. Procédé selon au moins l'une des revendications précédentes, comprenant en outre la prévision de l'unité de génération du système de commande électronique (1) sur le véhicule de travail (6), et la prévision d'au moins un signal parmi le premier signal de commande, le second signal de commande et le premier signal de commande initié par l'utilisateur du véhicule de travail (6) par l'intermédiaire du bus de données (3) à la première/seconde unité de commande électronique sur l'outil (8).

10. Procédé selon au moins l'une des revendications précédentes, dans lequel la détection du premier événement de fonctionnement comprend en outre la détection d'un paramètre d'événement de fonctionnement sélectionné dans le groupe suivant :
- un paramètre de localisation indiquant l'emplacement géographique actuel du véhicule de travail ;
- un paramètre de système de conduite d'un système de conduite caractéristique d'un système de conduite du véhicule de travail ;
- un paramètre de déplacement d'un itinéraire de déplacement caractéristique du déplacement du véhicule de travail comme un déplacement sur un champ ou un déplacement sur une route ;
- un paramètre de capteur d'un signal de capteur détecté par un dispositif de capteur tel qu'un dispositif de capteur installé sur la machine agricole ;
- un paramètre d'obstruction d'une obstruction détectée dans un environnement de la machine agricole, telle qu'une obstruction le long d'un itinéraire de déplacement du véhicule de travail ;
- un paramètre de sécurité d'une mesure de contrôle de sécurité ; et
- un paramètre d'état d'outil indicatif d'un état de l'outil.

11. Système de commande électronique (1) destiné à commander automatiquement une fonction auxiliaire d'une machine agricole comprenant un véhicule de travail (6) et un outil (8) pourvu d'une pluralité de composants fonctionnels (10), tels que des outils de travail ou une unité d'éclairage qui peuvent être commandés en fonctionnement par une pluralité de fonctions auxiliaires configurées chacune pour commander une ou plusieurs étapes de fonctionnement pour au moins un des composants fonctionnels (10), le système de commande électronique (1) étant configuré pour
- prévoir une machine agricole ayant un véhicule de travail (6) et un outil (8) pourvu d'une pluralité de composants fonctionnels (10) dont le fonctionnement peut être commandé par une pluralité de fonctions auxiliaires dont chacune est configurée pour commander une ou plusieurs étapes de fonctionnement pour au moins un des composants fonctionnels (10) ;
- fournir des données cartographiques dans le système de commande électronique (1), les données cartographiques indiquant la correspondance de la pluralité de fonctions auxiliaires avec une pluralité d'événements de fonctionnement détectables pour le véhicule de travail (6), lors du fonctionnement de la machine agricole, par une unité de détection (15) telle qu'un dispositif capteur du système de commande électronique (1) et affectés au véhicule de travail (6) ;
- détecter un premier événement de fonctionnement pour le véhicule de travail (6) par l'unité de détection (15) pendant que la machine agricole est en marche ;
- en réponse à la détection du premier événement de fonctionnement, sélectionner une première fonction auxiliaire parmi la pluralité de fonctions auxiliaires par une unité de sélection (16) du système de commande électronique (1), la première fonction auxiliaire étant cartographiée sur le premier événement de fonctionnement, et configurée pour commander le fonctionnement d'un premier composant fonctionnel parmi la pluralité de composants fonctionnels (10) de l'outil (8) ;
- générer, par une unité de génération (17) du système de commande électronique (1), un premier signal de commande pour commander le fonctionnement du premier composant fonctionnel affecté à la première fonction auxiliaire dans le système de commande électronique (1) ;
- recevoir, par l'intermédiaire d'un bus de données (3) du système de commande électronique (1), le premier signal de commande dans une première unité de commande électronique de l'outil (8) associée au premier composant fonctionnel de l'outil (8) ; et
- par la première unité de commande électronique, commander le fonctionnement du premier composant fonctionnel de l'outil (8) en fonction du premier signal de commande.

12. Machine agricole, comprenant un véhicule de travail (6), un outil (8) et un système de commande électronique (1) selon la revendication 11.
